# EUROPEAN PATENT SPECIFICATION

(11) **EP 3 026 257 B1**
(45) Date of publication and mention of the grant of the patent: **17.04.2019**
(21) Application number: 14290359.0
(22) Date of filing: 28.11.2014
(51) Int. Cl.: F03B 3/12

(54) **Vane for hydraulic turbine**
Schaufel für Wasserturbine
Aube pour turbine hydraulique

(43) Date of publication of application: 01.06.2016
(73) Proprietor: GE Renewable Technologies, 38100 Grenoble (FR)
(72) Inventor: Bustarret, Tomas, 38120 Saint Egrève (FR); Feriol, Philippe, 38190 Bernin (FR); Bremond, Jacques, 38120 Saint Egrève (FR); Prigent, Serge, 38700 Le Sappey en Chartreuse (FR)
(74) Representative: Brannen, Joseph Waclaw

(56) References cited:
- US-A1- 2006 120 869
- US-A1- 2014 227 100

## Description

### FIELD OF THE INVENTION

The present invention generally relates to hydraulic turbines. More in particular, the present invention relates to guide vanes and stay vanes for a hydraulic turbine.

### BACKGROUND

As well known, stay vanes and guide vanes (also known as wicket gates) are one of the main parts of hydraulic turbines such as, for example, Francis, Kaplan or pump turbine.

Stay vanes are main components of stay rings, which are normally constructed of upper and lower ring plates to which stay vanes are attached, normally welded. Stay vanes are fixed and not adjustable once welded. They have streamline shape to produce minimum losses in flow. The number of stay vanes, per stay ring, usually varies from 15 to 24. Inside hydraulic turbine, stay rings and stay vanes have several important functions: erection, hydraulic, structural and sealing function.

The main erection function of stay rings is to ensure leveling between a head cover and a bottom ring during turbine erection. The main hydraulic functions of the stay rings are: to guide the water flow to get the required velocity field in inlet of hydraulic regulation devices (guide vanes), to minimize hydraulic head losses, and to prevent Karman fluctuation at the outlet of stay vane trailing edge. Important structural function of stay rings is to sustain the different load cases, including concreting, normal operating cases, and exceptional operating cases. Finally, their sealing function is to ensure sealing between inlet and distributor (i.e. stay ring-head cover and stay ring-bottom ring).

Guide vanes (wicket gates) of Kaplan, Francis or pump turbines are hydraulic parts positioned around a runner of the turbine. There are normally from 20 to 24 guide vanes per turbine. The guide vanes control the runner inlet flow by being rotated due to operating mechanical system. Similarly to stay vanes, guide vanes are also of a streamline shape. The guide vanes have to be designed to perform several important functions.

First, the guide vanes have to control the leakage flow in a closed position. The guide vanes seal the distributor by obstruction. However, the obstruction is not perfect and there are three leaking areas: two functional clearances between the hydraulic profile sides and the wearing plates (upper and lower), and the contact between two guide vanes. Second, the guide vanes design should prevent any break of the guide vanes in an accidental jamming case. At closure, a foreign body can jam between two guide vanes. A safety device ensures that the reaction of operating load will not break the guide vane body. Additionally, hydraulic shape of the guide vanes has to be sustainable and long lasting. The hydraulic shape can be damaged by its environment. Beside the corrosion phenomena the water flow carries solid foreign bodies which impact and scratch the hydraulic parts. Finally, the design has to facilitate the hydraulic shape maintenance. Considering that the turbine owner wants to rework the hydraulic shape because it has been damaged, the state of the art design obliges him to dismantle the head cover and to take back the involved guide vane. This involves a huge time waste and production loss.

To perform all above mention functions, under extreme conditions and with a long lifetime, stay vanes and guide vanes design have to be carefully developed. Current state of the art devices are usually made of steel (stainless steel or carbon steel) plates welded together (see for example US 2014/227100). This type of design has several drawbacks. Some of the disadvantages are: difficulties in the fabrication, weight and handling of the vanes, problems regarding repair and refurbishment of stay vanes and rings.

For all above mentioned reasons, a new and improved design of hydraulic turbine vanes is needed.

### SUMMARY OF THE INVENTION

The object of the present invention is to solve the aforementioned problems by providing a hydraulic turbine vane as substantially defined in independent claim 1.

Preferred embodiments are defined in correspondent dependent claims.

According to preferred embodiments, which will be described in the following detailed description only for exemplary and non-limiting purposes, the present solution discloses a vane for a hydraulic turbine, comprising at least two plates consecutively disposed such to form a hollow hydraulic shape, and an inner element at least partially enclosed by said at least two plates, and wherein at least one of the plates is removably attached to the inner element.

According to an aspect of the invention, all the plates are removably attached to the inner element.

According to another aspect of the invention, at least two plates are removably attached to each other.

According to one preferred aspect of the invention, the number of plates is four or five.

According to another aspect of the invention, plates are attached to the inner element and/or to each other using removable assembly technology, such as bolts.

According to another aspect of the invention, the inner element is rectangular shaped beam or plate, preferably made of carbon steel.

According to another aspect of the invention, at least one of the plates is made of a composite material, preferably glass fiber reinforced composite.

According to another aspect of the invention, the vane further comprises at least one clearance between at least one plate and the inner element.

According to another aspect of the invention, the vane comprises at least two clearances separated by the inner element.

According to another aspect of the invention, the clearance between the plates and the inner element is at least partially filled with a foam material.

According to another aspect of the invention, the vane is a stay vane for hydraulic turbine.

According to another aspect of the invention, the vane further comprises an upper trunnion or/and a lower trunnion.

According to another aspect of the invention, the vane further comprises an upper side cover and/or a bottom side cover at least partially attached to the vane.

According to another aspect of the invention, the vane is a guide vane for hydraulic turbine.

The current application also provides for stay ring and hydraulic turbine comprising at least one of the vanes described above.

### BRIEF DESCRIPTION OF DRAWINGS

The foregoing objects and many of the attendant advantages of this invention will become more readily appreciated as the same becomes better understood by reference to the following detailed description when taken in conjunction with the accompanying drawings, wherein:
Figure 1 shows cross sections of the stay vanes from the prior art;
Figure 2 shows a perspective view of a guide vane from the prior art;
Figures 3a and 3b show a cross section of vanes according to embodiments of the present invention;
Figure 4 shows perspective view of a vane mounted on a lower ring of a stay ring according to an embodiment of the present invention;
Figure 5 shows a perspective view of a stay ring according to an embodiment of the present invention;
Figure 6 shows a cross section view of a vane according to an embodiment of the present invention;
Figure 7 shows a perspective view of a vane according to an embodiment of the present invention;
Figure 8 shows a perspective view of a vane according to an embodiment of the present invention;
Figure 9 shows a perspective view of a vane according to an embodiment of the present invention;

### DETAILED DESCRIPTION OF THE DRAWINGS

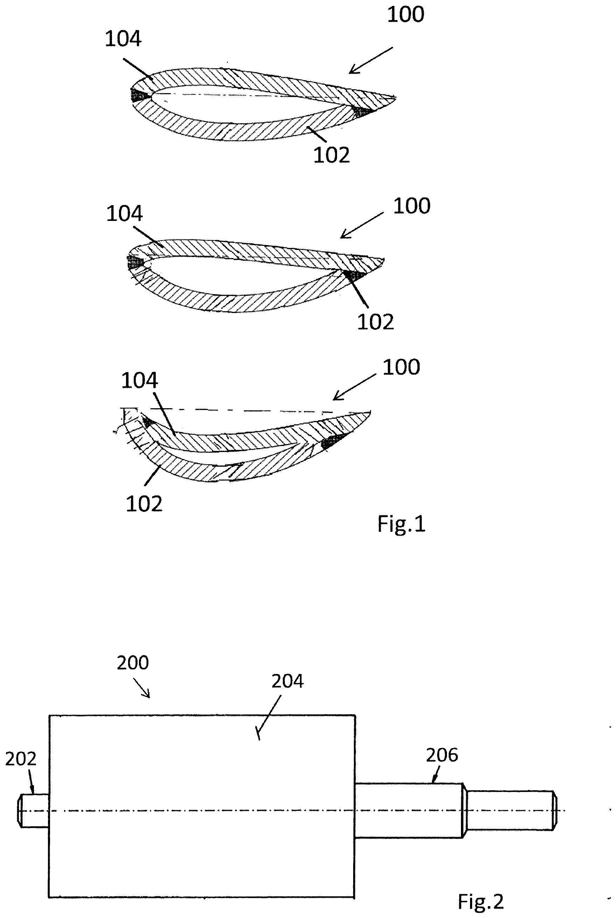

With reference to figure 1, it is showed three variations of stay vanes 100 from the prior art. The hydraulic profiles, all of streamlined shape, are slightly different, but all of them are constructed by welding two plates 102 and 104. As shown in Figure 1, stay vanes usually have a hollow profile, and they are made of steel. Before welding, the plates are often rolled or folded with machine tool. That is why the design is a manufacturable two dimensional (2D) section. Alternatively, stay vanes could have a full profile, instead of hollow profile, manufactured by a casting.

Figure 2 shows a perspective view of a guide vane 200 from the prior art. Normally, guide vanes are made of a steel material, and they have three main parts: hydraulic profile 204, a lower trunnion 202, and an upper trunnion 206.

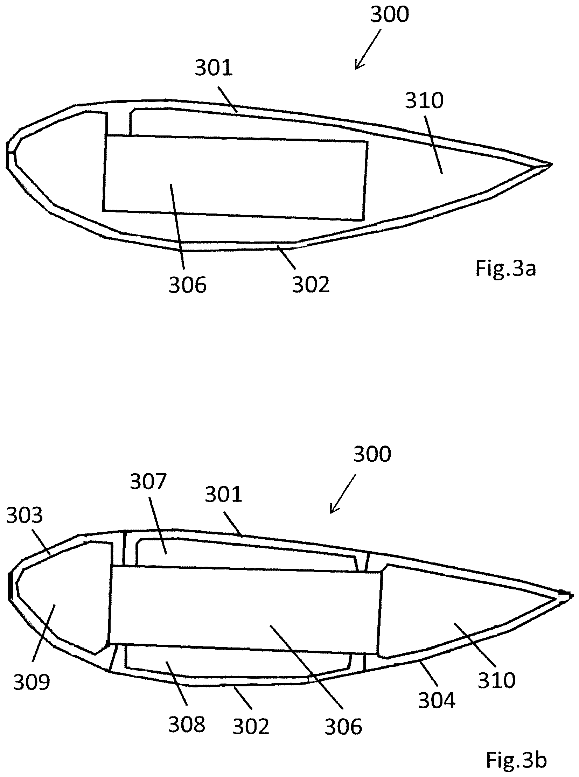

Figure 3a shows a cross section of a stay vane 300 according to an embodiment of the present invention. In this embodiment, shown here as a non-limiting example, the vane 300 comprises two plates 301 and 302 consecutively disposed forming a hydraulic shape. The plates may have different shapes such as straight, curved, and rounded. The plates may also have different thicknesses. In general number of plates is at least two. An inner element 306 is enclosed by the plates 301 and 302. In exemplary and non-limiting embodiment shown in Figure 3a one plate 301 is removably attached to the inner element 306. In one embodiment, the at least two plates 301 and 302 can be removably attached to each other. By removably attached, in general it is meant, for example, that the plate 301 can be dismantled from the inner element 306 and mounted again. One example of the means to removably attach the plates to the inner element 306 is using bolts. In another embodiment, not shown, in addition to the plate 301, the plate 302 is also removably attached to the inner element 306.

Figure 3b shows a cross section of a vane 300 according to preferred embodiment of the present invention. As shown in such preferred embodiment, shown here as a non-limiting example, the vane 300 comprises 4 plates 301, 302, 303, and 304 consecutively disposed forming a hydraulic shape. An inner element 306 is enclosed by the plates 301, 302, 303, and 304. In exemplary and non-limiting embodiment shown in Figure 3b all plates 301, 302, 303, and 304 are removably attached to the inner element 306. In another embodiment according to the invention, the at least two consecutive plates such as 301 and 303 can be removably attached to each other.

The above explained design helps to balance the pressure inside and outside each plate which limits as far as possible the pressure load onto the plates. This induces a very low structural constraint onto the plates.

In one embodiment of the present invention, the inner element 306 is a painted carbon steel or stainless steel plate or beam with a simple geometry section, such as rectangular. In general, the inner element 306 contributes to the structural function.

In one embodiment of the present invention, at least one of the plates 301, 302, 303, and 304 is made of a composite material, preferably glass fiber reinforced composite. In one preferred embodiment of the present invention, all the plates 301,302,303 and 304 are made of a composite material. The composite shaping processes make possible to manufacture easily three dimensional (3D) hydraulic profiles. The turbine obtains many advantages thank to a vane 300 according to the present invention: 3D composite plates can improve the water flow quality in turbine, concerning the assumption of velocity field uniformity in the vertical dimension; 3D composite plates allow the hydraulic profile to go paste the rings on the radial direction of the distributor, and ensure hydraulic continuity with the water guides. The dismountable composite plates allow modifying the hydraulic shape with a minimum machine down-time. In addition, the lightweight plates facilitate the handling. This particular advantage of the vane 300 according to the invention can be used for a hydraulic optimization or in case of machine refurbishment.

Composite material advantages makes possible to sustain the profile shape and surface finishes against water and solid impacts during operation. An improvement of environmental resistance is expected comparing with the painted carbon steel solution. The plates of the vane 300 according to the invention are dismountable to make possible to commute a worn one. The worn plates can be repaired in workshop. In addition, the composite solution allows trailing edges of the vane 300 thin design up to zero thickness. This allows better to optimize the shape of the profile of the vane 300 against Karman phenomenon.

As shown in the embodiments on Figure 3a, there is a clearance 310 between the plates 301 and 302 and the inner element. As shown in the embodiments on Figure 3b there several clearances 307, 308, 309, 310 between the plates 301,302,303,304 and the inner element 306. In one embodiment of the present invention, at least part of the clearance 307, 308, 309, 310, or whole clearance, can advantageously be filled with a foam material. The foam material is used to improve the strength of the plates during operating conditions (against pressure load) and in an accidental case (impact of a foreign body). The foam material contributes to structural function. According to the invention, if there is a significant load on the plates of the vane 300 then it is advantageous to put the foam material in the clearances where the load is high, to reinforce one or more plates. The example of the foam material that can be used is polyurethane.

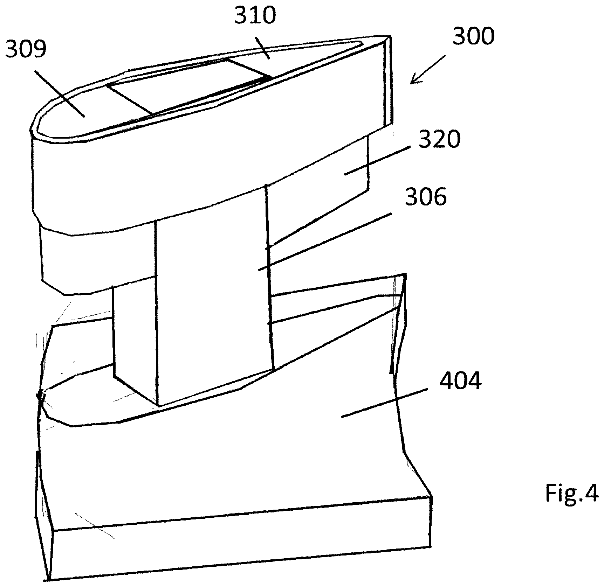

The vane 300 according to the invention may be advantageously used as a stay vane of a hydraulic turbine. Figure 4 shows a perspective view of a stay vane 300 mounted on a part of a lower ring 404 of a stay ring according to an embodiment of the present invention. Figure 4 is sketched to show only upper parts of the plates, so that an inner structure of the vane 300 including the foam 320 and the inner element 306 is visible. The inner element 306 is attached or welded to the lower ring 404.

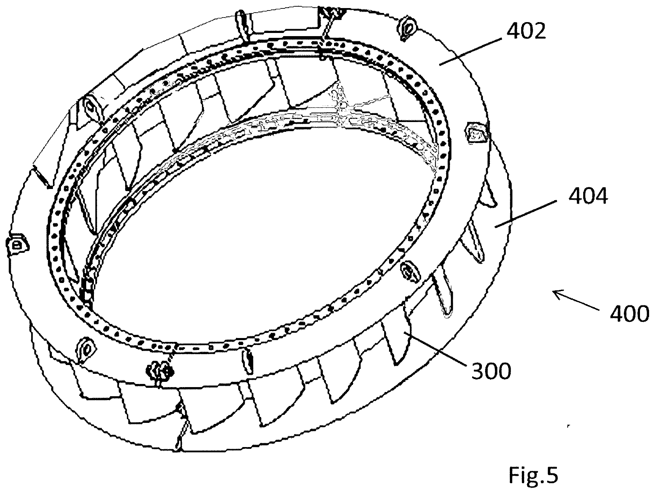

Figure 5 shows a perspective view of a stay ring 400 according to an embodiment of the present invention. The main elements of the stay ring 400 are an upper ring 402, the lower ring 404 and a plurality of stay vanes 300. The inner element is attached to the upper ring 402 and the lower ring 404, in one embodiment the attachment is by welding.

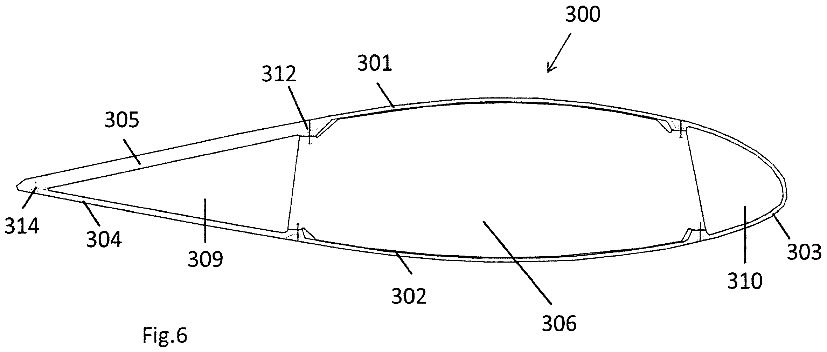

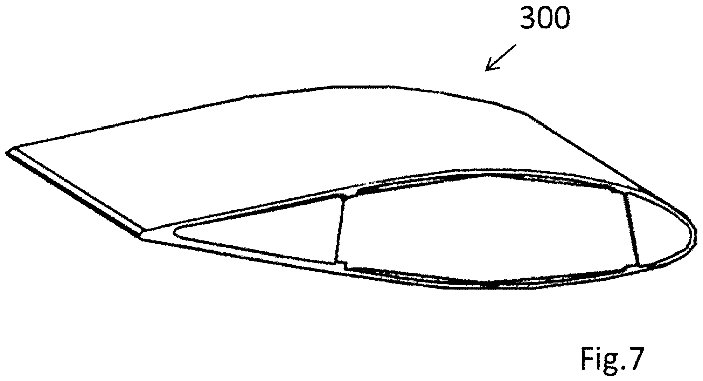

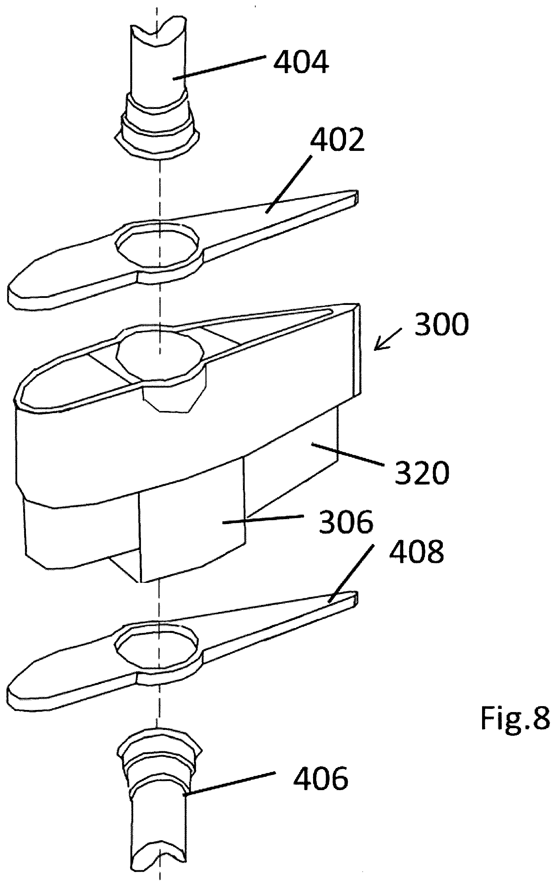

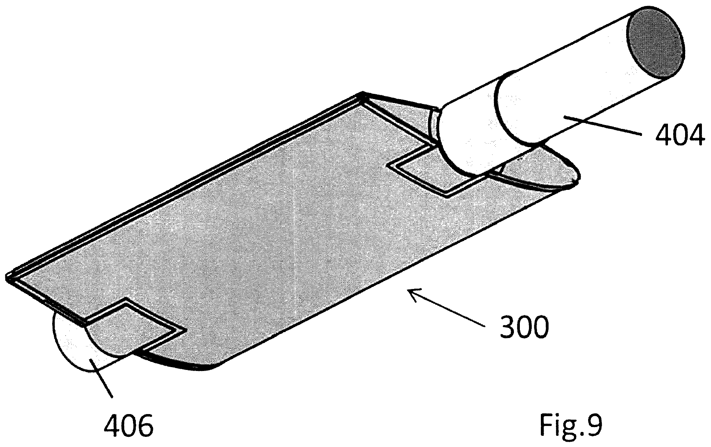

Figure 6 shows a cross section view of a vane according to another embodiment of the present invention. In this embodiment, there are 5 plates 301,302,303,304 and 305 removably attached, using bolts, to the inner element 306. The inner element 306 is following the shape of the adjacent plates 302 and 304, so that there can be substantially no clearance between plates 301 and 302 and the inner element 306.The plates 304 and 305 are removably attached to each other. In this embodiment they are attached using bolts. A clearance 309 between the plates 304,305 and the inner element 306, and a clearance 310 between the plate 303 and the inner element 306, are in this embodiment filled with a foam material. The perspective view of this embodiment according to the invention is shown in Figure 7. In one embodiment of the present invention, this design of the vane 300 may be advantageously used for a guide vane of a hydraulic turbine as shown in Figure 8 and Figure 9. As shown in Figure 8, in one preferred and non-limiting embodiment, the guide vane 300 comprises an upper trunnion 404, a lower trunnion 406, an upper side cover 402 and a bottom side cover 408, the both covers may be attached to the hydraulic shape of the vane 300. The upper trunnion 404, the inner element 306 and the lower trunnion 406 may be attached one to each other or may be created out of a single piece, preferably of steel material. Figure 8 is sketched to show only upper parts of the plates, so that an inner structure of the vane 300 including the foam 320 and the inner element 306 is visible. In one embodiment of the present invention, the plates of the vane 300 and the side covers 402,408 are composed of structural glass fiber reinforced composite material. Such a composite material may be shaped by an infusion molding or RTM light processes. The foams 320 may casted on the leading and trailing edges of the vane 300. On site, in one embodiment, the plates are joined on the inner element 306 by bolting solutions. Figure 9 shows the guide vane assembled of the parts shown in Figure 8.

The proposed design of the guide vane 300 has many advantages comparing to prior art solutions. The proposed design makes possible to include flexible membranes in the hydraulic shape sides. By pressurizing the chamber inside the hydraulic profile, it is possible to induce enough deformations in the membranes to reduce clearances on the sides and avoid leakage. In addition, the new design uses the flexible property of composite to ensure a superior contact area, so that the sealing is controlled on the contact line leading edge/ trailing edge. The composite shaping processes permit to insert elongation gauge in part body, and to monitor the structure and adapt the self-resetting system to detect an unusual elongation on the panel critical areas. The composite plates protect effectively vanes against impacts and scratches. The new design includes composite plates holding on the inner element by a dismountable assembly, so that they can be removed through the distributor without dismantling the head cover.

Although the present invention has been fully described in connection with preferred embodiments, it is evident that modifications may be introduced within the scope thereof, not considering the application to be limited by these embodiments, but by the content of the following claims.

## Claims

1. A vane (300) for a hydraulic turbine, comprising:
at least two plates (301,302)consecutively disposed such to form a hollow hydraulic shape; and
an inner element(306) at least partially enclosed by said at least two plates(301,302), **characterized in that**:
at least one of the plates (301) is removably attached to the inner element(306).

2. The vane (300) of claim 1, wherein all the plates (301,302,303,304,305) are removably attached to the inner element (306).

3. The vane (300) of claim 1 or 2, wherein at least two consecutive plates (301,302) are removably attached to each other.

4. The vane (300) of any of the preceding claims, wherein the number of plates is four (301,302,303,304) or five (301,302,303,304,305) .

5. The vane (300) of any of the preceding claims, wherein the plates (301,302,303,304,305) are attached to the inner element (306) and/or to each other using bolts (312,314).

6. The vane (300) of any of the preceding claims, wherein the inner element (306) is rectangular shaped beam.

7. The vane (300) according to any of the preceding claims, wherein at least one of the plates (301,302,303,304,305) is made of a composite material.

8. The vane (300) according to any of the preceding claims, wherein the vane (300) further comprises at least one clearance (307,308,309,310) between at least one plate (301,302,303,304,305) and the inner element (306) .

9. The vane (300) according to claim 8, wherein the vane (300) comprises at least two clearances (307,309) separated by the inner element (306).

10. The vane (300) according to claim 8 and 9, wherein the said at least one clearance (307,308,309,310) is at least partially filled with a foam material.

11. The vane (300) according to any of the preceding claims, wherein said vane (300) is a stay vane for a hydraulic turbine.

12. The vane (300) according to any of claims 1 to 10, further comprising an upper trunnion (404) or/and a lower trunnion (406).

13. The vane (300) of claim 12, wherein the vane (300) further comprises an upper side cover (402) and/or a bottom side cover (408) at least partially attached thereto the vane (300).

14. The vane (300) according to claims 12 or 13, wherein said vane (300) is a guide vane for a hydraulic turbine.

15. A stay ring (400) comprising at least one of the vanes (300) according to claims 1 to 11.

## Patentansprüche

1. Schaufel (300) für eine hydraulische Turbine, umfassend:
mindestens zwei Platten (301,302), die aufeinanderfolgend angeordnet sind, um eine hohle hydraulische Form zu bilden; und
ein inneres Element (306), das mindestens teilweise durch die mindestens zwei Platten (301, 302) eingeschlossen ist, **dadurch gekennzeichnet, dass**:
mindestens eine der Platten (301) entfernbar an dem inneren Element (306) angebracht ist.

2. Schaufel (300) nach Anspruch 1, wobei alle Platten (301,302,303,304,305) entfernbar an dem inneren Element (306) angebracht sind.

3. Schaufel (300) nach Anspruch 1 oder 2, wobei mindestens zwei aufeinanderfolgende Platten (301,302) entfernbar aneinander angebracht sind.

4. Schaufel (300) nach einem der vorstehenden Ansprüche, wobei die Anzahl der Platten vier (301,302,303,304) oder fünf (301,302,303,304,305) ist.

5. Schaufel (300) nach einem der vorstehenden Ansprüche, wobei die Platten (301,302,303,304,305) an dem inneren Element (306) und/ oder aneinander unter Verwendung von Bolzen (312,314) angebracht sind.

6. Schaufel (300) nach einem der vorstehenden Ansprüche, wobei das innere Element (306) ein rechteckig geformter Träger ist.

7. Schaufel (300) nach einem der vorstehenden Ansprüche, wobei mindestens eine der Platten (301,302,303,304,305) aus einem Verbundwerkstoff gefertigt ist.

8. Schaufel (300) nach einem der vorstehenden Ansprüche, wobei die Schaufel (300) weiter mindestens einen Freiraum (307,308,309,310) zwischen mindestens einer Platte (301,302,303,304,305) und dem inneren Element (306) umfasst.

9. Schaufel (300) nach Anspruch 8, wobei die Schaufel (300) mindestens zwei Freiräume (307,309) umfasst, die durch das innere Element (306) getrennt sind.

10. Schaufel (300) nach Anspruch 8 und 9, wobei der mindestens eine Freiraum (307,308,309,310) mindestens teilweise mit einem Schaumwerkstoff gefüllt ist.

11. Schaufel (300) nach einem der vorstehenden Ansprüche, wobei die Schaufel (300) eine Stützschaufel für eine hydraulische Turbine ist.

12. Schaufel (300) nach einem der Ansprüche 1 bis 10, weiter umfassend einen oberen Drehzapfen (404) oder/und einen unteren Drehzapfen (406).

13. Schaufel (300) nach Anspruch 12, wobei die Schaufel (300) weiter eine Abdeckung (402) einer oberen Seite und/oder eine Abdeckung (408) einer unteren Seite umfasst, die die Schaufel (300) mindestens teilweise daran anbringt.

14. Schaufel (300) nach den Ansprüchen 12 oder 13, wobei die Schaufel (300) eine Führungsschaufel für eine hydraulische Turbine ist.

15. Stützring (400), umfassend mindestens eine der Schaufeln (300) nach den Ansprüchen 1 bis 11.

## Revendications

1. Aube (300) pour une turbine hydraulique, comprenant :
au moins deux plaques (301, 302) disposées consécutivement de façon à former une forme hydraulique creuse ; et
un élément interne (306) entouré au moins partiellement par lesdites au moins deux plaques (301, 302), **caractérisée en ce que** :
au moins l'une des plaques (301) est attachée amovible à l'élément interne (306).

2. Aube (300) selon la revendication 1, dans laquelle toutes les plaques (301, 302, 303, 304, 305) sont attachées amovibles à l'élément interne (306).

3. Aube (300) selon la revendication 1 ou 2, dans laquelle au moins deux plaques consécutives (301, 302) sont attachées amovibles l'une à l'autre.

4. Aube (300) selon l'une quelconque des revendications précédentes, dans laquelle le nombre de plaques s'élève à quatre (301, 302, 303, 304) ou cinq (301, 302, 303, 304, 305).

5. Aube (300) selon l'une quelconque des revendications précédentes, dans laquelle les plaques (301, 302, 303, 304, 305) sont attachées à l'élément interne (306) et/ou les unes aux autres à l'aide de boulons (312, 314).

6. Aube (300) selon l'une quelconque des revendications précédentes, dans laquelle l'élément interne (306) est une poutre de forme rectangulaire.

7. Aube (300) selon l'une quelconque des revendications précédentes, dans laquelle au moins l'une des plaques (301, 302, 303, 304, 305) est réalisée en un matériau composite.

8. Aube (300) selon l'une quelconque des revendications précédentes, dans laquelle l'aube (300) comprend en outre au moins un dégagement (307, 308, 309, 310) entre au moins une plaque (301, 302, 303, 304, 305) et l'élément interne (306).

9. Aube (300) selon la revendication 8, dans laquelle l'aube (300) comprend au moins deux dégagements (307, 309) séparés par l'élément interne (306).

10. Aube (300) selon les revendications 8 et 9, dans laquelle ledit au moins un dégagement (307, 308, 309, 310) est au moins partiellement rempli d'un matériau en mousse.

11. Aube (300) selon l'une quelconque des revendications précédentes, dans laquelle ladite aube (300) est une aube avant-directrice pour une turbine hydraulique.

12. Aube (300) selon l'une quelconque des revendications 1 à 10, comprenant en outre un tourillon supérieur (404) et/ou un tourillon inférieur (406).

13. Aube (300) selon la revendication 12, dans laquelle l'aube (300) comprend en outre un couvercle de côté supérieur (402) et/ou un couvercle de côté de dessous (408) attachés au moins partiellement à l'aube (300).

14. Aube (300) selon les revendications 12 ou 13, dans laquelle ladite aube (300) est une aube directrice pour une turbine hydraulique.

15. Avant-distributeur (400) comprenant au moins l'une des aubes (300) selon les revendications 1 à 11.
